# EUROPEAN PATENT SPECIFICATION

(11) **EP 0 451 430 B1**
(45) Date of publication and mention of the grant of the patent: **18.05.1994**
(21) Application number: 90830614.5
(22) Date of filing: 21.12.1990
(51) Int. Cl.: C02F 9/00, C02F 3/02, B01D 21/00, B01D 17/025

(54) **Plant to depollute waste water, particularly water from olive crushers**
Anlage für Abwasserreinigung, insbesondere für Wasser von ölpressen
Installation pour le traitement d'eau usée, en particulier d'eau provenant de mulins à huile

(30) Priority: 09.04.1990 IT 1050490
(43) Date of publication of application: 16.10.1991
(73) Proprietor: Sapia, Francesco, 87060 Destro di Longobucco (CS) (IT); Sapia, Peppino, 87060 Destro di Longobucco (CS) (IT); Sapia, Maria, 87060 Destro di Longobucco (CS) (IT); Sapia, Saverio, 87060 Destro di Longobucco (IT)
(72) Inventor: Sapia, Francesco, 87060 Destro di Longobucco (CS) (IT); Sapia, Peppino, 87060 Destro di Longobucco (CS) (IT); Sapia, Maria, 87060 Destro di Longobucco (CS) (IT); Sapia, Saverio, 87060 Destro di Longobucco (IT)
(74) Representative: Iannone, Carlo Luigi

(56) References cited:
- DE-A- 2 657 488
- FR-A- 870 132
- FR-A- 2 482 640
- US-A- 3 493 216
- US-A- 4 396 508
- US-A- 4 713 172
- CHEMICAL ABSTRACTS, vol. 93. no. 16, 20th October 1980, page 323, right-handcolumn, abstract no. 155366t, Columbus, Ohio, US; R.M. BRADLEY et al.:"Wastewater treatment in the olive oil industry"
- ABWASSERTECHNIK, dritte, überarbeitete Auflage, Band V, 1985, Ernst& Sohn, Berlin, DE; "Abwassertechnik"

## Description

This invention relates to a plant for depolluting waste waters, and in particular for depolluting waste waters from olive crushers.

More particularly, this invention relates to a plant of the type mentioned above, that can be employed in various kinds of operations and that allows an optimal depollution to be obtained of waste waters at a minimum power consumption.

The operation of depolluting waste waters, and in particular waste waters coming from olive crushers, is realized at present for the most part by means of plants of biological type that require a very high power (about 30 kW per 1,000 m³ of water) for about 5 months, in addition to the employment of solid fuels (about 3,000 quintals).

Such plants, which are very complicated from the structural standpoint because they are provided with filtering and other complex devices, are very costly and difficult to manage.

Moreover, they are subject to very frequent production stops and, just as a result of their structural complication, their duration is quite short.

Finally, the result obtained is not an optimal one from the depollution standpoint.

With a view to the above considerations, the Applicants have realized a plant which is mainly based on the exploitation of the microorganisms present in said waters for reducing the concentration of the polluting compounds, so that very remarkable results are obtained.

According to the present invention, an attempt has been performed at realizing an extremely simple and rational plant wherein the power required for the cycle is of the lowest possible value (for large-size plants, it is even of 1 kW per 1,000 m³ of water for 30 or 40 days, without employing solid fuels or chemical products or any other fuel).

The depollution cycle, which is mainly based on maximum oxygenation of waters and on their evaporation, in addition to the exploitation of microorganisms present in waters, allows the bottoms, oils, phenols and so on to be almost completely removed.

Such results are obtained, according to the present invention, by means of a plant whose characteristics are disclosed in the claims and with reference to the enclosed drawings.

This invention will be disclosed in the following according to some preferred embodiments of the same, with particular reference to the figures of the enclosed drawings wherein:
Figure 1 is a top view of the plant according to the present invention;
Figure 2 is a cross-sectional top view of the plant according to the present invention;
Figure 3 is a cross-sectional longitudinal view of the plant shown in Figure 1;
Figure 4 is a transverse cross-sectional view of the plant shown in Figure 1;
Figure 5 is a top view of the covering of the plant shown in Figure 1;
Figure 6 shows a detail of the tubs of the plant shown in Figure 1;
Figure 7 shows a detail of the top channels of the plant according to this invention;

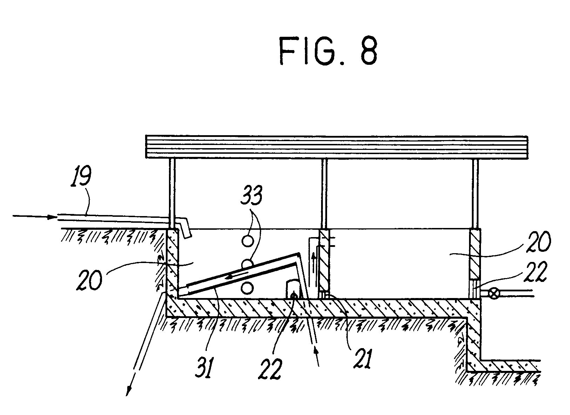

Figure 8 shows a cross-sectional view of the tubs intended for collecting oil; and
Figure 9 shows in particular a tank for recovering the bottoms of the plant according to the present invention.

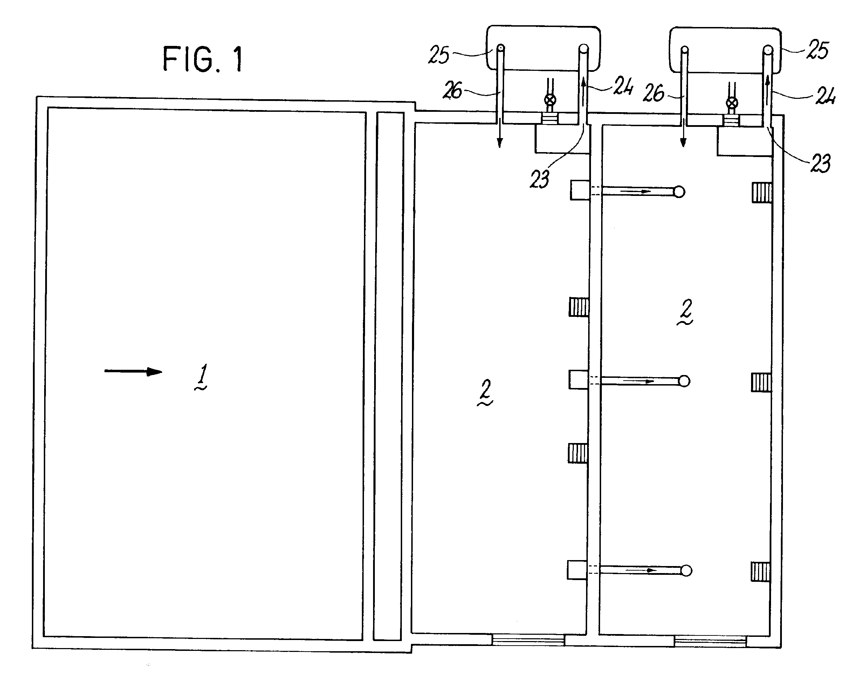

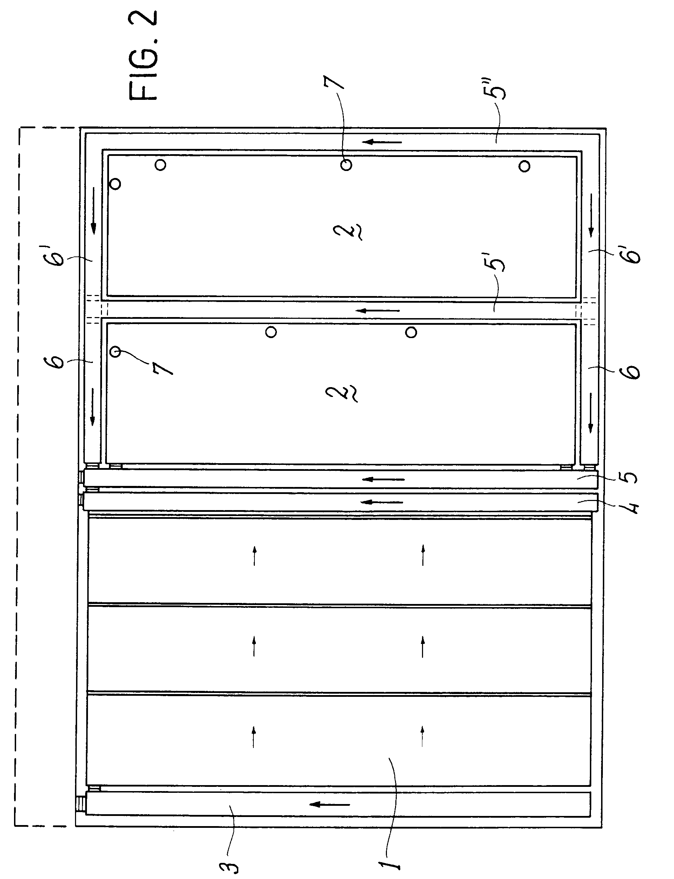

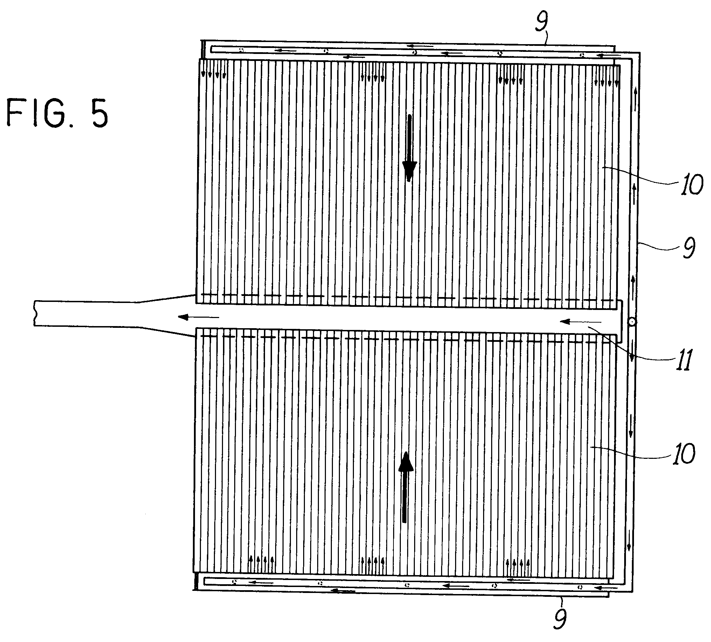

With reference now to the enclosed drawings and more particularly with reference to Figures 1-5, a plant for depolluting waste waters can be observed, in particular for depolluting waters from crushers, according to the present invention.

The plant, in the kind of embodiment shown in the Figures comprises an oxygenation plate 1 and two sedimentation tubs 2. A set of opencast channels 3, 4, 5, 5', 5'', 6, 6' placed above and below said plate 1 and said tubs 2 is provided, whose function will be disclosed in the following.

A suction circuit 7 that comprises a pump 8 and is connected to a gutter circuit 9 is provided for oxygenating and for evaporating water in said sedimentation tubs 2.

A covering 10 is arranged above said tubs 2, said covering being fed by overflowing from said circuit 7 and sloping towards the central portion so as to convey waters towards an opencast undergutter channel 11.

Said channel 11 ends at a point corresponding to said plate channel 3, which channel is so realized as to overflow towards the plate 1.

The latter slopes towards the sedimentation tubs 2.

The two channels 4 and 5 which are arranged between said plate 1 and said first tub 2, are so realized as to allow waters to overflow towards the tub 2, together with channels 6. The channels 5', 5'' and 6' are so realized as to overflow into the second tub 2.

Each tub 2 that slopes transversely towards the downstream tub 2, is provided with service doors 12 and with an opening 13 for communication with the adjacent tub 2, a weir 14 being provided within the upstream tub 2 at the point corresponding with said opening, while, within the downstream tub 2, a surface pipe 15 bearing a float 16 at its end and a control cord 17 is arranged.

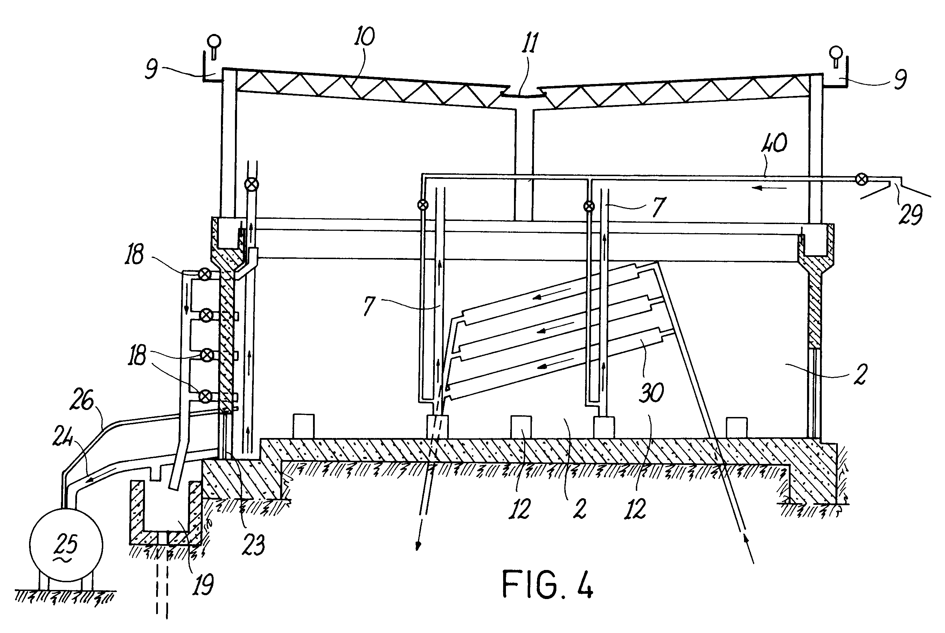

Moreover, said tubs 2 are provided (see Figure 4) with discharge points 18 for the floating oil, which are connected to a collecting manifold 19 which is connected in turn to two tubs 20 intended for the collection of oil.

Said tubs 20 also communicate with each other through the opening 21 and are provided with discharge trap doors 22.

An opening 23 is provided in the bottom of said tubs 2, such bottom being at a slope in the longitudinal direction, said opening 23 being in communication through the pipe 24 with the tank 25 which is in turn connected again to said tub 2 through a natural circulation pipe 26 and through a forced circulation pipe 27.

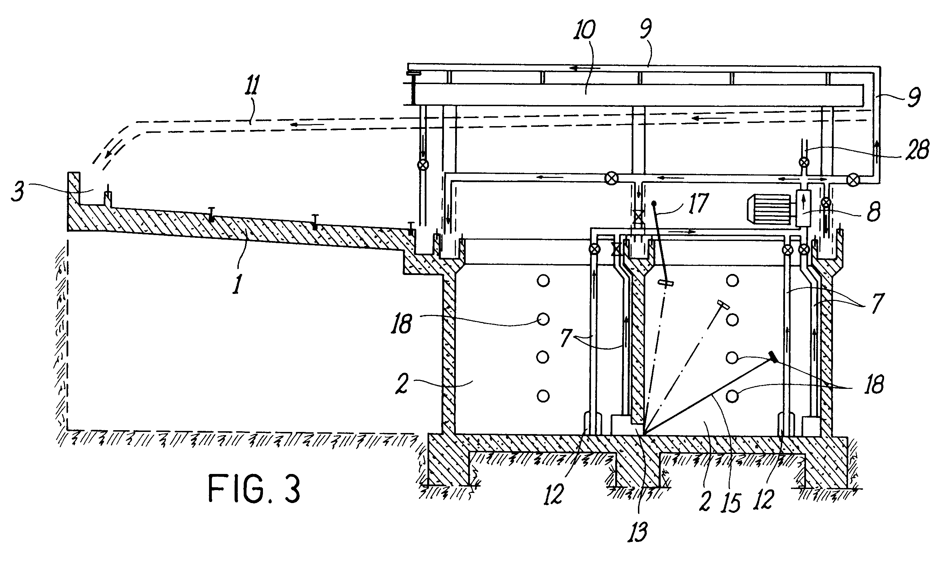

Figure 3 shows a water plug 28 which is employed for dispersing mucilages, while Figure 4 shows an air plug 29.

Moreover, a set of heat exchangers 30, 31 is provided in said tubs 2 and 20 in order to possibly heat the liquids.

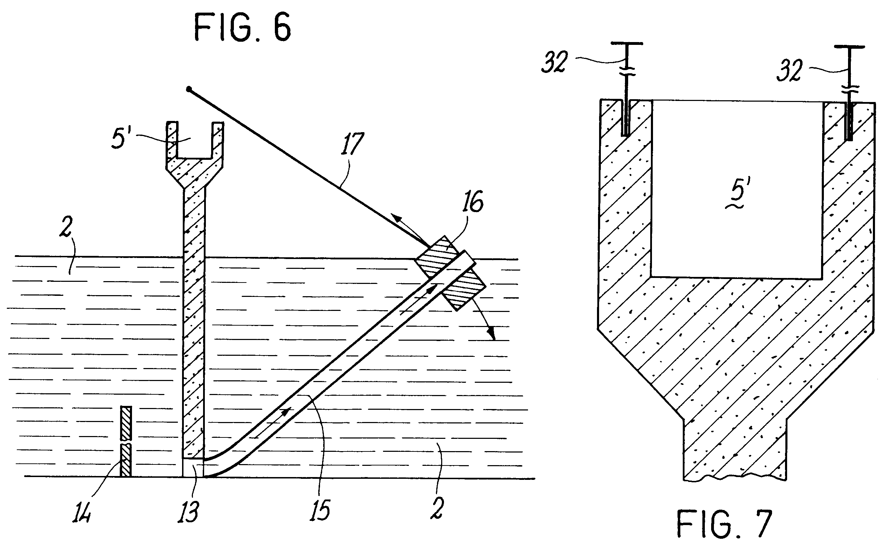

Figure 7 shows a detail of the channels 5' provided with the adjustable gate valves 32 to obtain the overflowing of water down both sides.

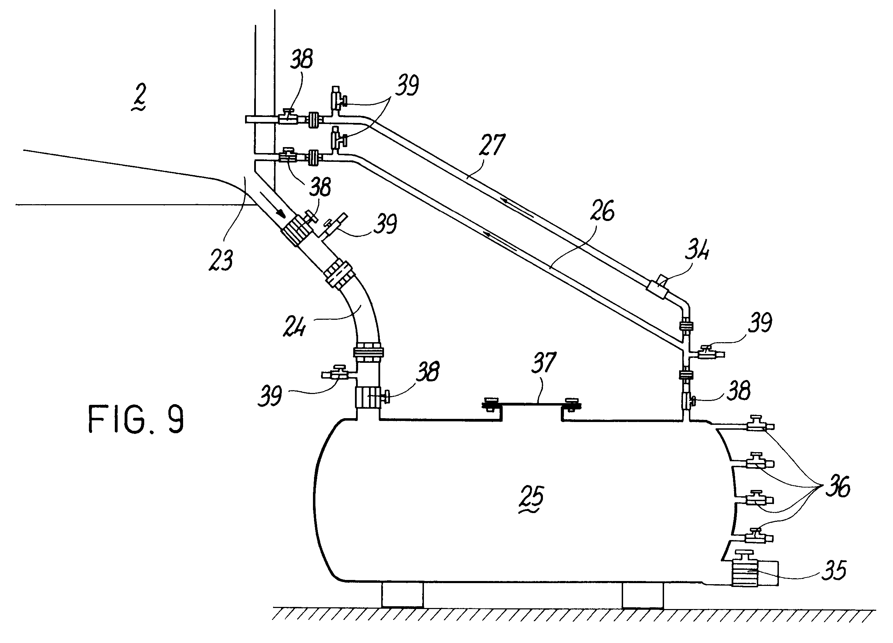

With reference now to Figure 9, it can be observed that the tub 2 is endowed with a slope towards the opening 23, so that when water is introduced into the tub 2, the tank 25 becomes immediately filled.

The material that is decanted within said tank 25 settles onto the bottom of the same, whereas the material that is decanted within said tub 2 slides into said tank through the pipe 24.

The decanted liquids go back through the pipe 26 as they are pushed by the heavier weight of the bottoms entering through the pipe 24.

The pipe 27 provided with a pump 34, is put in action for forcing water towards the tub 2 if the pipe 26 becomes plugged. If such circulation does not occur, the bottoms cannot flow down the pipe 24. The circulation is increased by the fermentation gases that are formed within the tank 25, and possibly also heating the pipe 24.

The tank 25 is provided with a discharge point 35 as well as with the level discharge points 36 for the bottoms and with a trap door 37.

Gate valves 38 and faucets 39 are provided in the pipes 24, 26 and 27.

Turning now to the description of the working cycle of the plant according to the present invention, the waste waters are fed by means of suitable conduits or by a tank truck, directly into the tubs 2 or onto the plate 1.

Water is received into said first tub 2 and into the tank 25, and next it passes into the second tub 2.

Tubs 2 can also be present in higher number.

Water flows into the next tub 2 from the opening 13 which is shielded by said weir 14 for limiting the possible passage of bottoms, said water flowing through the pipe 15 so that the float 16 rises (see Figure 6).

Oxygen-poor waters flow from the bottom of the tub 2 to the top of the second tub 2 where they are oxygenated.

When the amount of water is sufficient to fill all circuits, water is subjected to suction according to the operator's will from one of said tubs 2. Indeed, if the second tub 2 is to be excluded, it is sufficient to raise the float 16 manually by means of the control cord 17 so as to prevent the same from being filled.

The pump 8 sucks water from the tub 2 and introduces the same into the circuit 9.

Said circuit 9 is of the opencast type in order to obtain maximum oxygenation of waters.

The waters within the circuit 9 overflow onto the covering 10 and are conveyed towards the channel 11, said channel also being of the opencast type, from which they are conveyed into the plate channel 3.

Through such circulation, water becomes so oxygenated that, in addition to the evaporation, microorganisms which are present in said waters and are useful for reducing the polluting substances keep alive. The oxygenation is to be so adjusted that no excess occurs with respect to the actual requirements.

The channel 11 is preferably made up of an absorbing material in order to obtain a higher evaporation.

Waters overflow from the channel 3 onto the plate 1 and then into the channels 4 and 5.

Waters through the channels 4, 6 and 5' overflow again into the first tub 2.

The gate valves 32 of the channel 5' are so arranged as the case may be as to allow the overflowing of water to occur into a tub 2 or into the other one, or into both of them.

Partitioning weirs are provided on the plate 1 in order to avoid the formation of small streams.

By means of such cycle, the oxygenation of waters, a partial evaporation and a separation of the solid compounds have been obtained, the heaviest solid compounds settling onto the bottom of said tub 2 and then going down into the tank 25, whereas the lightest compounds, i.e. oil and a part of the mucilages, keep floating on the surface.

Mucilages are separated and are caused to precipitate by spraying water which is conveyed through the water plug 28, said water breaking such mucilages.

Oil floating on the surface is separated, possibly by means of a movable surface scraper, through the discharge points 18 that are provided at different heights as shown in Figure 4, or can be substituted with a floating pipe.

The oil that has been separated is collected together with a certain amount of water into the tub 20.

The first one of said tubs 20 will previously be filled with water so that the oil that arrives keeps floating on the surface.

Water passes through the opening 21 into the second tub 20 and then it is again recirculated, whereas oil is removed through the level discharge points 33.

Oil is recovered, possibly with the aid of a surface movable scraper and, removing said oil from the surface of the tub 2, a further oxygenation of waters is obtained.

Water that circulates through the plant can be oxygenated through the air plug 29 so as to obtain optimum mixing and an increase in the evaporation.

The air plug 29 is so shaped as to prevent rain waters from going into the conduit 40, which is connected to the base point of the level height in the tubs.

The heat exchangers 30 and 31 serve the purpose of keeping waters at a certain temperature corresponding to about the temperature at the outflow from the crushers, so as to prevent the biological transformation processes of the polluting compounds from being stopped.

Waters at the end of said depollution cycle are very suitable for irrigation purposes and for introducing them into sewers, whereas they might require a biological treatment for being discharged into rivers, said biological treatment being very simple and smooth because waters are already free from oils, from bottoms and from the largest part of the polluting compounds as well.

An optimal exploitation will be obtained by having at disposal a double plant.

The system of continuous and automatic removal and collection of the bottoms described in Figure 9 is particularly useful for must during fermentation, for wine, for oil and for all decanting liquids as well.

## Claims

1. A plant for depolluting waste waters, and more particularly for depolluting waste waters from olive crushers, said olant being characterized in that it comprises at least one vessel or tub (2) for the sedimentation of said waters which is connected at its bottom to a tank (25) for collecting the sedimentation bottoms; a circuit for the circulation (7) and the oxygenation (9) of said waters, which circuit sucks through pump means (8) waters from said sedimentation tub (2) and conveys said waters onto a covering (10) on which said water flows down towards an opencast channel (11); a plate (1) sloping towards said sedimentation tub (2), which is provided with a first top channel (3) and is fed by said opencast channel (11), from which channel said water overflows from said plate (1) and goes towards the tub (2); second top channels (5, 6) arranged around said tub (2) and fed by said plate (1); and a discharge point (18) for removing the floating compounds, and in particular oil, which float on the surface of water contained within said sedimentation tub (2) towards tanks (25) wherein oil is collected and becomes separated.

2. A plant for depolluting waste waters according to claim 1, characterized in that a number of sedimentation tubs are provided, said tubs being in communication at their bottom portion through a shielded opening and through a pipe which is arranged over said opening and is provided with a float.

3. A plant for depolluting waste waters according to claims 1 or 2, characterized in that said circuit for the circulation and sucking of water is realized for the largest portion as an opencast circuit and provides an outer air plug for further oxygenation of water.

4. A plant for depolluting waste waters according to claim 2, characterized in that top channels are provided also between adjacent sedimentation tubs.

5. A plant for depolluting waste waters according to claim 4, characterized in that said top channels are provided with gate valves whose heights can be adjusted so as to allow water to overflow towards one of the two directions or towards both directions.

6. A plant for depolluting waste waters according to anyone of the preceding claims, characterized in that longitudinal weirs are provided on said plate in order to avoid the formation of streamlets.

7. A plant for depolluting waste waters according to anyone of the preceding claims, characterized in that said tank for collecting bottoms is connected to said sedimentation tub by means of an inlet pipe, a pipe of natural recirculation and a pipe of forced recirculation, which is provided with a circulation pump, the plant being provided with discharge openings and with openings for controlling the level of bottoms.

8. A plant for depolluting waste waters according to anyone of the preceding claims, characterized in that a water plug is provided for spraying at the top part the materials floating on the liquid surface.

9. A plant for depolluting waste waters according to anyone of the preceding claims, characterized in that said discharge point for the compounds floating on the liquid surface is arranged in each sedimentation tub and is provided at different levels.

10. A plant for depolluting waste waters according to anyone of the preceding claims 1-8, characterized in that said discharge device for the compounds floating on the liquid surface is made up of a pipe provided with a float.

11. A plant for depolluting waste waters according to anyone of the preceding claims, characterized in that two tubs are provided for the collection and separation of oil, said tubs being in communication with each other at their lower portions and are provided with discharge devices for the oil level as well as with devices for causing water to recirculate towards the plant.

12. A plant for depolluting waste waters according to anyone of the preceding claims, characterized in that said sedimentation tubs as well as said tanks or tubs for collecting and separating oil are provided with heat exchange means for heating water.

## Patentansprüche

1. Anlage fuer Abwasserreinigung, insbesondere fuer Abwasser von Oelpressen, gekennzeichnet durch mindestens ein Becken (2) fuer die Ablagerung des Abwassers, der am dessen Boden mit einem Behaelter (25) zur Aufnahme von Niederschlag verbunden ist; eine Kreislaufanordnung zum Umleiten (7) und zur Oxydierung (9) der Abwaesser, wobei diese Leitungsanordnung durch Pumpenmittel (8) die Abwaesser vom vorgenannte Ablagerungsbecken (2) absaugt und an eine Abdeckung (10) zuleitet, auf der die Abwaesser nach unten zu einem unbedeckten Kanal (11) abfliessen; ein zum vorgenannten Backen zugeneigter Unterbau (1), der mit einem ersten oberen Kanal (3) versehen und vom vorgenannten umbedeckten Kanal (11) versorgt wird, wonach das Abwaesser vom vorgenannten Unterbau (1) ueberfliesst und zum Becken (2) zufliesst; zweite, um das vorgenannte Becken angeordnete und vom Unterbau (11) versorgte obere Kanaele (5,6); und eine Auslaufstelle (18) zum Abfuehren von schwimmenden Verbindungen, insbesondere Oel, das auf der Oberflaeche des im vorgenannten Ablagerungsbecken (2) enthaltenen Wassers zu den Behaeltern (25) zuschwimmt, in den das Oel aufgenommen und abgeschieden wird.

2. Anlage fuer Abwasserreinigung nach Anspruch 1, dadurch gekennzeichnet, dass eine Anzahl von Ablagerungsbecken vorgesehen ist, die untereinander am deren Bodenteil durch eine geschirmte Oeffnung und durch eine Rohrleitung in Verbindung stehen, wobei diese Rohrleitung ueber der vorgenannten Oeffnung angeordnet und mit einem Schwimmer versehen ist.

3. Anlage fuer Abwasserreinigung nach Anspruch 1 oder 2, dadurch gekennzeichnet, dass die vorgenannte Kreislaufanordnung fuer den Kreislauf und das Absaugen des Wassers zum groessten Teil unbedeckt ist und eine aeusseres Luftzuleitung zur weiteren Oxydierung des Wassers aufweist.

4. Anlage zur Abwasserreinigung nach Anspruch 2, dadurch gekennzeichnet, dass zwischen den aneinander anliegenden Niederschlagbecken auch obere Kanaele vorgesehen sind.

5. Anlage zur Abwasserreinigung nach Anspruch 2, dadurch gekennzeichnet, dass die vorgenannten oberen Kanaele mit Klappeventilen versehen sind, deren Hoehe so eingestellt werden kann, dass das Wasser in einer oder in der anderen Richtung, oder auch in beiden Richtungen durchliessen kann.

6. Anlage zur Abwasserreinigung nach je einem der vorhergehenden Ansprueche, dadurch gekennzeichnet, dass zur Vermeidung der Bildung von Baechleinen, auf dem vorgenannten Unterbau Laengsschranken vorgesehen sind.

7. Anlage zur Abwasserreinigung nach je einem der vorhergehenden Ansprueche, dadurch gekennzeichnet, dass der vorgenannte Behaelter (25) zur Aufnahme von Niederschlag mit dem vorgenannten Ablagerungsbecken durch eine Einfuehrungsleitung, eine Leitung mit natuerlichem Kreislauf und eine Leitung mit einem durch eine Pumpe gezwungenem Kreislauf verbunden ist, wobei die Anlage mit Auslauf oeffnungen und mit Oeffnungen zur Ueberwachnung der Niederschlagshoehe versehen ist.

8. Anlage zur Abwasserreinigung nach je einem der vorhergehenden Ansprueche, dadurch gekennzeichnet, dass eine Wasserzuleitung zum Ueberspruehen von aufschwimmenden Materialien vorgesehen ist.

9. Anlage zur Abwasserreinigung nach je einem der vorhergehenden Ansprueche, dadurch gekennzeichnet, dass die vorgenannte Auslaufstelle fuer die aufschwimmenden Verbindungen in jedem Auflagerungsbecken an unterschiedlicher Hoehervorgesehen ist.

10. Anlage zur Abwasserreinigung nach je einem der vorhergehenden Anspruechen 1 bis 8, dadurch gekennzeichnet, dass die vorgenannte Auslaufstelle fuer auf der Fluessigkeitsoberflaeche schwimmenden Verbindungen aus einer mit einem Schwimmer versehen Rohrleitung besteht.

11. Anlage zur Abwasserreinigung nach je einem der vorhergehenden Ansprueche, dadurch gekennzeichnet, dass zwei Becken zur Aunahme und Abscheidung von Oel vorgesehen sind, die untereinander an deren Unterteilen in Verbindung stehen und mit Auslaufstellen fuer das Oel und mit Umlaufmitteln zur Rueckfuehrung von Wasser zur Anlage zurueck versehen sind.

12. Anlage zur Abwasserreinigung nach je einem der vorhergehenden Ansprueche, dadurch gekennzeichnet, dass die vorgenannten Ablagerungsbecken und die vorgenannten Behaelter zur Aufnahme und Abscheidung von Oel mit Waermeaustauschmitteln zur Heizung des Wassers versehen sind.

## Revendications

1. Installation pour l'épuration des eaux d'écoulement, en particulier des eaux provenant de mulins à huile, ladite installation étant caractérisée en ce qu'elle comprend au moins une cuve (2) de sédimentation de l'eau, qu'est jointe inférieurement à un réservoir (25) pour collecter des fonds de sédimentation; un circuit pour la circulation (7) et l'oxydation (9) de ladite eau, ce circuit aspire l'eau par de moyens à pompe (8) de ladite cuve de sédimentation (2) et la dirige vers un couverture (10) sur laquele l'eau s'écoule en bas vers un canal (11) à ciel ouvert; une plate-forme (1) inclinée vers ladite cuve de sedimentation (2), et munie d'une premiere canalisation de sommet (3), alimenté de la canalisation à ciel ouvert (11), l'eau débord sur ladite plate-forme (1) et puis dans la cuve (2); deuxiemes canalisations de sommet (5, 6) situées autour de ladite cuve (2) et alimentées de ladit plate-forme (1); et un point de déversement (18) pour enlever les composés flottants, et en particulier l'huile, qui flotte sur la surface de l'eau contenue dans ladite cave de sedimentation (2) vers le réservoir (25), dans lequel l'huile est recueilli et séparé.

2. Installation pour l'épuration des eaux d'écoulement selon la revendication 1, caracterisée en ce qu'elle comprend plusieurs caves de sedimentation, qui sont en communication entre leur à travers une ouverture inférieure masquée et à travers un tuyau, placé sur ladite ouverture et muni d'un flotteur.

3. Installation pour l'épuration des eaux d'écoulement selon la revendication 1 ou 2, caracterisée en ce que ledit circuit de circulation et d'aspiration de l'eau à realisée, en grande partie, à ciel ouvert et présente une prise d'eau extérieure pour l'oxydation ultérieure de l'eau.

4. Installation pour l'épuration des eaux d'écoulement selon la revendication 2, caracterisée en ce que les canalisations de sommet sont prevues aussi entre les cuve de sedimentation adjacentes.

5. Installation pour l'épuration des eaux d'ecoulement selon la revendication 4, caracterisée en ce que lesdites canalisations de sommet sont munies des vannes de hauteur réglable, pour permettre le debordement de l'eaux dans une ou l'autre direction.

6. Installation pour l'épuration des eaux d'écoulement selon une des revendications précédentes, caracterisée en ce que des barriéres longitudinales sont placées sur ladite plate-forme pour éviter la formation des ruisselets.

7. Installation pour l'épuration des eaux d'écoulement selon une des revendications précédentes, caracterisée en ce que ledit resevoir (25) pour collecter des fonds de sédimentation est joint à la cave de sédimentation par un tuayeau d'entré, une circulation naturelle et une circulation forcée, munie d'une pumpe de circulation et est muni des ouvertures de déversement et des ouvertures de contrôl du niveau des fonds.

8. Installation pour l'épuration des eaux d'écoulement selon une des revendications précédentes, caracterisée en ce que une prise d'eau est prevue pour asperger supérieurement les matériels émergents.

9. Installation pour l'épuration des eaux d'écoulement selon une des revendications précédentes, caracterisée en ce que ledit point de dévergement des substances émergentes est prevu sur chacune cave de sédimentation au niveau différent.

10. Installation pour l'épuration des eaux d'écoulement selon les revendications 1 à 8, caracterisée en ce que ledit point de déversement est muni d'un tuayeau avec un flotteur.

11. Installation pour l'épuration des eaux d'écoulement selon une des revendications précédentes, caractérisée en ce qu'elle comprend deux réservoirs de collection et de separation d'huil, comunicantes inférieurement et munies des déversements au niveau d'huils et de recirculation de l'eau vers l'installation.

12. Installation pour l'épuration des eaux d'écoulement selon une des revendications précédentes, caractérisée en ce que ledites cuves de sédimentation et ledits réservoirs de collection et de séparation d'huil sont munis des moyens échangeurs de chaleur pour chauffer l'eau.
